# EUROPEAN PATENT APPLICATION

(11) **EP 4 708 122 A1**
(43) Date of publication of application: **11.03.2026**
(21) Application number: 24198902.9
(22) Date of filing: 06.09.2024
(51) Int. Cl.: G06K 7/10, B60R 25/00, G01V 3/10, G07C 9/00, H02J 50/10, H04B 5/77

(54) **DETECTING WHEN A WIRELESS CREDENTIAL IS IN PROXIMITY TO AN INDUCTIVE ANTENNA**

(71) Applicant: ASSA ABLOY AB, 107 23 Stockholm (SE)
(72) Inventor: CEDERBLAD, Mats, Stockholm (SE)
(74) Representative: Kransell & Wennborg KB

(57) **Abstract**

It is provided a method for detecting when a wireless credential (2) is in proximity to an inductive antenna (6). The method is performed by a credential detector (3). The method comprises: providing (40) a transmission signal (30) to be emitted using the antenna (6); measuring (42) a response signal (31) from the antenna (6); determining (44) a start time indication (10); determining (46) an end time indication (12) based on an amplitude of the response signal being less than an end threshold value (24); deriving (48) a duration indication (13) between the start time indication (10) and the end time indication (12); and determining (50) that a wireless credential (2) is near the antenna (6) based on the duration indication (13) being shorter than a threshold duration indication (25).

## Description

### TECHNICAL FIELD

The present disclosure relates to the field of detecting that a wireless credential is in proximity to an inductive antenna.

### BACKGROUND

Electronic locks have become increasingly prevalent in securing access to various physical spaces, including residential buildings, commercial establishments, and restricted areas within larger facilities. These electronic locks often utilize wireless credentials, such as Radio Frequency Identification (RFID) cards or Near-Field Communication (NFC) devices, to grant or deny access based on the presence of an authorized credential.

Such electronic locks typically operate by regularly scanning for the presence of a credential. When a credential is detected in proximity of the lock, the authentication device of the lock is woken up and if the authentication of an authorized credential is successful, the lock mechanism is activated to allow entry. However, the search for the presence of a credential can lead to high power consumption, reducing the battery life of the lock. This is particularly problematic for locks that are not connected to a constant power source, and rely on batteries for operation. Moreover, variations in the strength and quality of the signal emitted by the credential can lead to inconsistent detection, resulting in false negative or false positive detection. This unreliability can compromise security and user experience.

### SUMMARY

One object is to detect the proximity of a wireless credential in a manner that is more reliable than in the prior art.

According to a first aspect, it is provided a method for detecting when a wireless credential is in proximity to an inductive antenna. The method is performed by a credential detector. The method comprises: providing a transmission signal to be emitted using the antenna; measuring a response signal from the antenna; determining a start time indication; determining an end time indication based on an amplitude of the response signal being less than an end threshold value; deriving a duration indication between the start time indication and the end time indication; and determining that a wireless credential is near the antenna based on the duration indication being shorter than a threshold duration indication.

The start time indication may be determined based on when a slope counter is started, in which case the end time indication is determined based on a value of the slope counter when the amplitude of the response signal is less than the end threshold value.

The start time indication may be determined based on when the response signal measurement is started and/or when the transmission signal is provided.

The start time indication may be determined based on the amplitude of the response signal being less than a start threshold value, wherein the start threshold value is greater than the end threshold value.

The method may further comprise: processing the response signal by rectifying and low-pass filtering the response signal.

The method may further comprise: determining an antenna fault when the duration indication is greater than a fault duration indication.

The antenna may be a coil antenna.

The response signal may be based on the transmission signal.

According to a second aspect, it is provided a credential detector for detecting when a wireless credential is in proximity to an inductive antenna. The credential detector is configured to: provide a transmission signal to be emitted using the antenna; measure a response signal from the antenna; determine a start time indication; determine an end time indication based on an amplitude of the response signal being less than an end threshold value; derive a duration indication between the start time indication and the end time indication; and determine that a wireless credential is near the antenna based on the duration indication being shorter than a threshold duration indication.

The start time indication may be determined based on when a slope counter is started, in which case the end time indication is determined based on a value of the slope counter when the amplitude of the response signal is less than the end threshold value.

The start time indication may be determined based on when the response signal measurement is started and/or when the transmission signal is provided.

The start time indication may be determined based on the amplitude of the response signal being less than a start threshold value, wherein the start threshold value is greater than the end threshold value.

According to a third aspect, it is provided an electronic lock comprising the credential detector according to the second aspect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2A and 2B illustrate how the response signal is received and processed;
Figs 3A-C illustrate various embodiments of determining when a credential is nearby;
Fig 4 is a schematic illustration of how the duration indication determined as illustrated in figures 3A-B, is compared against the threshold duration indication, according to one embodiment;
Fig 5 is a flowchart illustrating embodiments for determining when a wireless production is proximity to an inductive antenna; and
Fig 6 is a schematic diagram illustrating an embodiment of the credential detector of Fig 1.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, it is detected when a credential is nearby an inductive antenna based on providing a transmission signal and measuring a corresponding response signal. A duration indication is determined based on when the amplitude of the response signal falls below an end threshold value. If a credential is near, more energy will be consumed by the credential, whereby the response signal attenuates faster than in the case where there is no credential near the inductive antenna. By comparing the duration indication against a threshold duration indication, a credential is considered to be in proximity to the inductive antenna when the duration indication is shorter than the threshold duration indication.

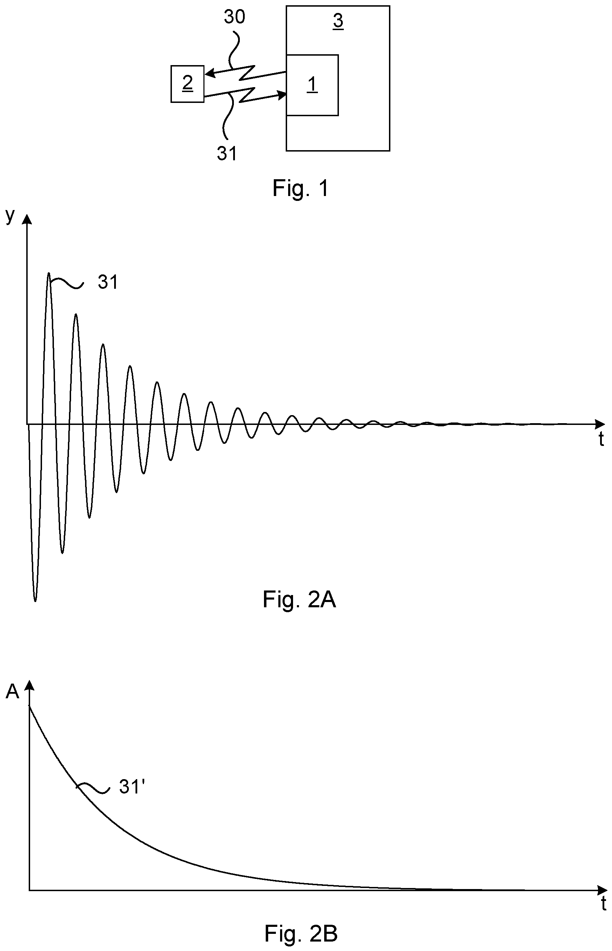

Fig 1 is a schematic diagram illustrating an environment in which embodiments presented herein can be applied.

An electronic lock 3 is provided to secure a physical space, such as a room, building, around this space to which access is desired to be controlled. The electronic lock comprises a credential detector. The credential detector is used to determine when a credential is nearby. The credential can be a credential based on near-field communication, such as any of the standards for RFID (radio frequency identification), near-field communication (NFC), Bluetooth Low Energy (BLE) or Ultra-wideband (UWB). This supports credentials that are passive and that are powered by the query signal from a reader. The electronic lock 3 is one example of such a reader. The credential detector can operate when other parts of the electronic lock (such as an MCU (microcontroller unit)) are inactive, or in a power save state. The credential detector can then determine when a credential is nearby, and will then trigger other components of the electronic block to activate once the credentials nearby. the electronic lock can then determine whether to grant axis and unlock a locking mechanism based on communication with the credential. The resulting solution is very power efficient and more reliable than card detectors in the prior art.

Since power consuming components of the electronic lock can be in a power saving state when no credential is nearby, significant amounts of power consumption is saved. This allows the electronic to be powered by a self-contained power supply such as a battery.

In order to determine whether a credential is nearby, the credential detector transmits a transmission signal and a response signal is measured by the credential detector. Based on the response signal, as described in more detail pillow, the credential detector can determine whether a credential is near or not.

Fig 2A and 2B illustrate how the response signal is received and processed. Looking first to figure to Fig 2A, the horizontal axis represents time and the vertical axis represents signal level of the received response signal. The response signal alternates and attenuates over time.

Looking now to Fig 2B, the response signal has been rectified and low-pass filtered, to arrive at a processed response signal 31'. The process response signal 31' more clearly illustrates the attenuation of the response signal overtime. Based on how fast the attenuation occurs, it can be determined whether a credential is near the credential detector 3. More specifically, if a credential is near, more energy will be consumed by the credential, whereby the response signal attenuates faster than in the case where there is no credential.

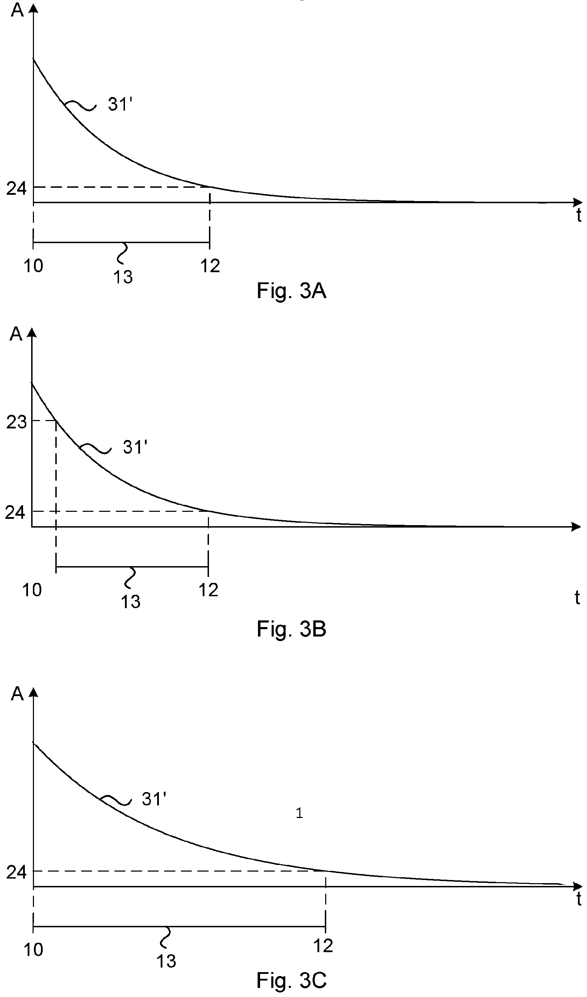

Figs 3A-C illustrate various embodiments of determining when a credential is nearby. The determination is based on the process response signal of Fig 2B. the amplitude of the response signal is compared to and threshold value, where an end time indication is determined when the response signal falls below the end threshold value. A duration from a start time indication is derived. This duration can be compared against a threshold duration to determine whether a credential is nearby or not.

Looking first to figure 3A, the start time indication is when the response signal measurement is started and or when the transmission signal is provided.

Looking now to Fig 3B, the start time indication is determined based on the amplitude of the response signal being less than a start threshold value the start threshold value is greater than the end threshold value. In this embodiment the duration can be placed anywhere on the response signal slope, providing more flexibility to tailor the measurement to a characteristic part of the response signal.

Looking now to figure 3C, it is illustrated a case whether there is a failure of the antenna. In this case the attenuation is very slow. When the duration is greater than a filtration indication, this is an indication that there is something wrong with the antenna, such as the antenna not being connected to the transceiver.

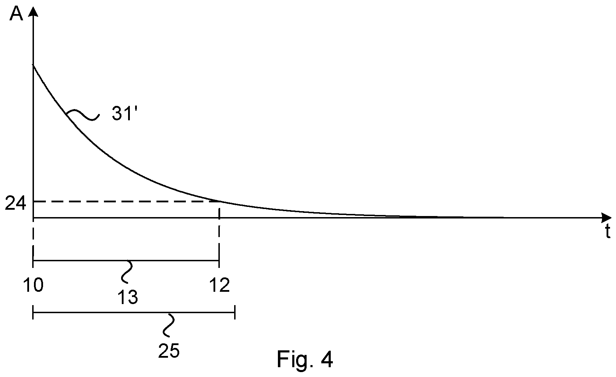

Fig 4 is a schematic illustration of how the duration indication determined as illustrated in figures 3A-B, is compared against the threshold duration indication, according to one embodiment. The threshold duration indication 25 is defined such that when the duration indication 13 is less than a threshold duration indication 25, it is considered that a wireless credential 2 is in proximity (to the credential detector 1). In contrast, when they duration indication 13 is greater than the duration indication threshold 25, it is considered that no wireless credential is in proximity (to the credential detector 1).

In order to calibrate the threshold duration indication 25, the credential detector is applied in the situation where no wireless credential is nearby. This calibration can e.g. be performed already at the factory. The threshold duration indication 25 is first tuned such that it is right on the border between considering a wireless credential to be proximate or not. Second, the threshold duration indication 25 is reduced by a minor amount, e.g. 1%, in order to significantly reduce the risk of a false positive determination of a proximate wireless credential. Such false positives could otherwise trigger unnecessary power consumption e.g. by waking up the MCU when this is not needed. It is to be noted that the detector could detect other objects also, other than wireless credentials since identifying a credential with 100% certainty (and for example detect its type) would consume too much energy. Hence, a certain rate of false positives, such as when someone approaches the credential detector with a metallic object, is thus acceptable, since subsequent authentication will fail.

Since the threshold duration indication 25 is virtually at the border of when a negative determination is made, the threshold duration indication 25 is at a very sensitive level and the wireless credential is detectable at a longer distance away than if the tuning is not done. Hence, this procedure of calibration makes the detection of wireless credentials 2 in the proximity of the credential detector 1 very sensitive without excessive risk of false positives of credential detection. The calibration reduces the consequences of variations in clock signals, which can occur especially for low-power clocks. A calibration on site could also be applied in order to avoid systematic false positive (for ex. if a metallic element is in proximity of the antenna).

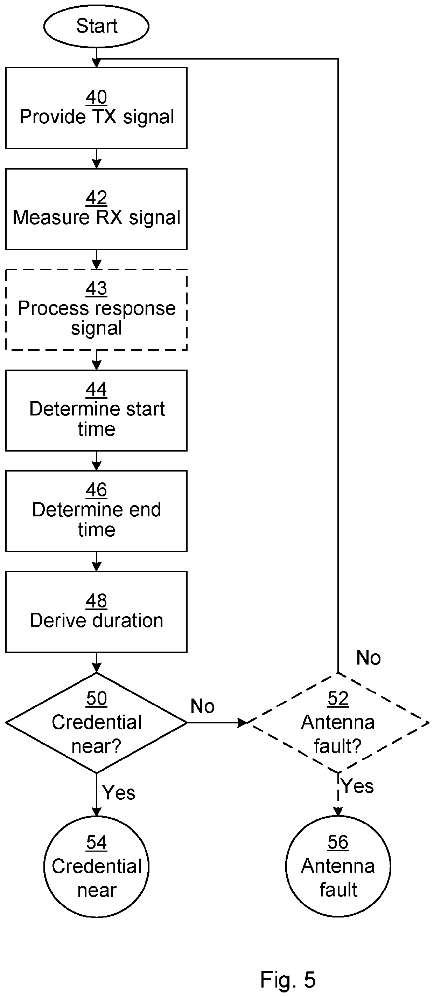

Fig 5 is a flowchart illustrating embodiments for determining when a wireless production is proximity to an inductive antenna. The method is performed by a credential detector. The antenna 6 can be a coil antenna.

In a *provide TX signal* step 42, the credential detector 1 provides a transmission signal 30 to be emitted using the antenna 6. The transmission signal can be provide by loading a capacitor of the credential detector 1, which is released to the inductive antenna.

In a *measure RX signal* step 42, the credential detector 1 measures a response signal 31 from the antenna 6. The response signal 31 can be based on the transmission signal. The measurement is performed by the inductive antenna receiving a signal which provides its output as the response signal 31.

In an optional *process response signal* step 43, the credential detector 1 processes the response signal by rectifying and low-pass filtering the response signal. This process is illustrated by Figs 2A-B, and is explained above.

In a *determine start time* step 44, the credential detector 1 determines a start time indication 10.

In one embodiment, a slope counter is used. In this case, the start time indication 10 is determined based on when a slope counter is started. The start time indication 10 can be determined based on when the response signal measurement is started and/or when the transmission signal is provided. In other words, in this case, the start time indication 10 is coupled to starting the current instance of credential detecting. This embodiment is illustrated in Fig 3A, explained above.

Alternatively, the start time indication 10 is determined based on the amplitude of the response signal 31 being less than a start threshold value 23, wherein the start threshold value 23 is greater than the end threshold value 24. This embodiment is illustrated in Fig 3B, explained above. The start threshold value 23 can be expressed as a voltage, against which an electrical signal representing the amplitude of the response signal is compared. This comparison can be implemented using a comparator. The term comparator is to be interpreted broadly and can e.g. be a comparator based on an operational (OP) amplifier or a Schmitt trigger, or in any other suitable manner.

In a *determine end time* step 46, the credential detector 1 determines an end time indication 12 based on an amplitude of the response signal being less than an end threshold value 24, as illustrated in Figs 3A-C. The end threshold value 24 can be expressed as a voltage, against which an electrical signal representing the amplitude of the response signal is compared. This comparison can be implemented using a comparator or a Schmitt trigger, or in any other suitable manner.

When a slope counter is used, the end time indication 12 is determined based on a value of the slope counter when the amplitude of the response signal is less than the end threshold value 24.

In a *derive duration* step 48, the credential detector 1 derives a duration indication 13 between the start time indication 10 and the end time indication 12. When a slope counter is used, the duration indication can be the number of pulses that have been counted from the start time indication 10 to the end time indication 12. In other words, it is not necessary to convert the duration indicator 13 to a value in an SI related unit, such as microseconds, milliseconds, etc.

In a conditional *credential near* step 50, the credential detector 1 determines whether a wireless credential 2 is near the antenna 6. When the duration indication 13 is shorter than a threshold duration indication, this is interpreted as a credential being near the credential detector 1, whereby the credential near state 54 is assumed. Otherwise, no credential is considered to be near, whereby the method restarts, or proceeds to an optional conditional antenna fault step 52.

In the optional conditional antenna *fault* step 52, the credential detector 1 determines whether an antenna fault occurs. When the duration indication 13 is greater than a fault duration indication (which is longer than the threshold duration indication), this is interpreted as an antenna fault (see Fig 3C and description above), and an antenna fault state 56 is assumed. Otherwise, it is considered that no antenna fault occurs, and the method restarts. The antenna fault can e.g. be due to the antenna not being connected or that the antenna is physically broken.

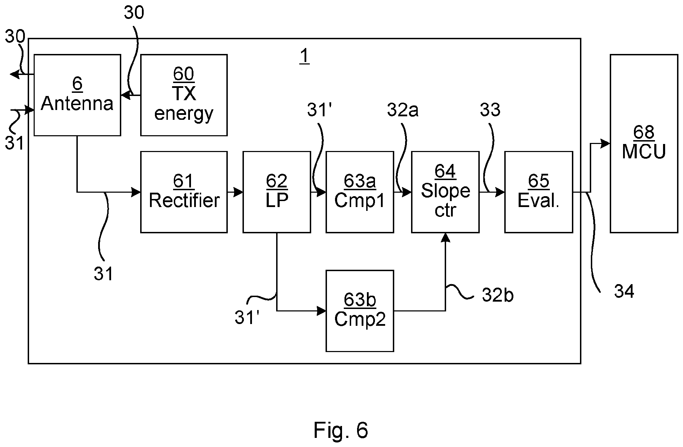

Fig 6 is a schematic diagram illustrating an embodiment of the credential detector 1 of Fig 1. A transmission energy component 60 is used to load energy for the transmission signal. the transmission energy component 60 can for instance be implemented as a capacitor.

The energy from the transmission energy component 60 is provided as a transmission signal 30 to the inductive antenna 6, corresponds to step 40. The inductive antenna 6 can e.g. be implemented as a coil antenna or other suitable antenna that is useable for near-field communication. The inductive antenna 6 transmits the provided transmission signal 30, and receives a response signal 31, corresponds to step 42.

The response signal 31 is output to an optional rectifier 61. The rectifier 61 can be implemented using diodes or any other suitable manner as known in the art per se. A rectified signal is provided to an optional low-pass filter 62 to even out the variations in the received response signal. The low-pass filter 62 can be any suitable low-pass filter that evens out the variations in the received response signal. For instance, the low-pass filter 62 can be implemented using discrete elements such as resistors, capacitors, and/or inductors. The rectification and filtering by the rectifier 61 and the low-pass filter 62 corresponds to step 43.

Once rectified and filtered, a processed response signal 31' is optionally provided to a first comparator 63a to determine a start of the duration to be measured, when the start time is based on a specific amplitude. This embodiment is illustrated in Fig 3B, described above. Additionally, the processed response signal 31' is provided to a second comparator 63b for determining the end of the duration to be measured. When the start of the duration (as illustrated in Fig 3A and described above) is not based on a specific amplitude of the response signal, the first comparator 63a can be omitted. As described above, the term comparator is to be interpreted broadly and can e.g. be a comparator based on an operational (OP) amplifier or a Schmitt trigger, or in any other suitable manner.

A slope counter 64 is controlled by at least the second comparator 63b, and optionally by the first comparator 63a (triggering the start of the slope counter 64, corresponding to one embodiment of step 44), to determine the duration to be measured. Alternatively, the start of the slope counter is triggered by the transmission energy component 60 or the antenna 6 (not shown), also corresponding to an embodiment of step 44. Once the slope counter 64 has been stopped by an end signal 32b from the second comparator 63b, the duration indication 33 is determined by the slope counter 64, corresponds to step 48. The duration indication 33 is provided by the slope counter 64 is provided to an evaluator 65.

The evaluator 65 compares the duration indication 33 against the threshold duration indication (described above). This corresponds to step 50. When the duration indication 33 is less than a threshold duration indication, the evaluator provides wake up signal 34 to the MCU 68. Once the MCU 68 is active, it can perform tasks as appropriate to evaluate the credential which is considered to be nearby using the credential detector, i.e. for access control. The MCU 68 can return to a low-power (sleeping) state based on an inactivity timer. Optionally, the evaluator 65 also compares the duration indication against a fault duration indication, which corresponds to step 52, for detecting when an antenna fault has occurred.

It is to be noted that the credential detector 1 can be implemented using discrete components or a mixed-mode programmable logic device (PLD), also known as a mixed-mode programmable chip. The mixed-mode PLD provides both analogue and digital components within a single chip. These chips provide the flexibility of programmable digital logic alongside configurable analogue circuitry, enabling complex designs that require both types of signal processing.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for detecting when a wireless credential (2) is in proximity to an inductive antenna (6), the method being performed by a credential detector (3), the method comprising:
providing (40) a transmission signal (30) to be emitted using the antenna (6);
measuring (42) a response signal (31) from the antenna (6);
determining (44) a start time indication (10);
determining (46) an end time indication (12) based on an amplitude of the response signal being less than an end threshold value (24);
deriving (48) a duration indication (13) between the start time indication (10) and the end time indication (12); and
determining (50) that a wireless credential (2) is near the antenna (6) based on the duration indication (13) being shorter than a threshold duration indication (25).

2. The method according to claim 1, wherein the start time indication (10) is determined based on when a slope counter is started, and wherein the end time indication (12) is determined based on a value of the slope counter when the amplitude of the response signal is less than the end threshold value (24).

3. The method according to claim 1 or 2, wherein the start time indication (10) is determined based on when the response signal measurement is started and/or when the transmission signal is provided.

4. The method according to claim 1 or 2, wherein the start time indication (10) is determined based on the amplitude of the response signal (31) being less than a start threshold value (23), wherein the start threshold value (23) is greater than the end threshold value (24).

5. The method according to any one of the preceding claims, further comprising:
processing (43) the response signal by rectifying and low-pass filtering the response signal.

6. The method according to any one of the preceding claims, further comprising:
determining (52) an antenna fault when the duration indication (13) is greater than a fault duration indication.

7. The method according to any one of the preceding claims, wherein the antenna (6) is a coil antenna.

8. The method according to any one of the preceding claims, wherein the response signal (31) is based on the transmission signal.

9. A credential detector (1) for detecting when a wireless credential (2) is in proximity to an inductive antenna (6), wherein the credential detector (1) configured to:
provide a transmission signal (30) to be emitted using the antenna (6);
measure a response signal (31) from the antenna (6);
determine a start time indication (10);
determine an end time indication (12) based on an amplitude of the response signal being less than an end threshold value (24);
derive a duration indication (13) between the start time indication (10) and the end time indication (12); and
determine that a wireless credential (2) is near the antenna (6) based on the duration indication (13) being shorter than a threshold duration indication (25).

10. The credential detector (1) according to claim 9, wherein the start time indication (10) is determined based on when a slope counter is started, and wherein the end time indication (12) is determined based on a value of the slope counter when the amplitude of the response signal is less than the end threshold value (24).

11. The credential detector (1) according to claim 9 or 10, wherein the start time indication (10) is determined based on when the response signal measurement is started and/or when the transmission signal is provided.

12. The credential detector (1) according to claim 9 or 10, wherein the start time indication (10) is determined based on the amplitude of the response signal (31) being less than a start threshold value (23), wherein the start threshold value (23) is greater than the end threshold value (24).

13. An electronic lock (1) comprising the credential detector (1) according to any one of claims 9 to 12.
